# EUROPÄISCHE PATENTSCHRIFT

(11) **EP 4 196 836 B1**
(45) Veröffentlichungstag und Bekanntmachung des Hinweises auf die Patenterteilung: **08.10.2025**
(21) Anmeldenummer: 21762666.2
(22) Anmeldetag: 12.08.2021
(51) Int. Cl.: G02B 21/00, G01N 21/64, G02B 21/36

(54) **VERFAHREN, OPTISCHE VORRICHTUNG UND NACHRÜSTSATZ ZUR ERZEUGUNG VON LICHTBLÄTTERN MITTELS EINES RETROREFLEKTORS**
METHOD, OPTICAL APPARATUS AND RETROFIT KIT FOR PRODUCING LIGHT SHEETS BY MEANS OF A RETROREFLECTOR
PROCÉDÉ, APPAREIL OPTIQUE ET KIT DE RATTRAPAGE POUR LA PRODUCTION DE FEUILLES DE LUMIÈRE AU MOYEN D'UN RÉTRORÉFLECTEUR

(30) Priorität: 14.08.2020 DE 102020210369
(43) Veröffentlichungstag der Anmeldung: 21.06.2023
(73) Patentinhaber: Leica Microsystems CMS GmbH, 35578 Wetzlar (DE)
(72) Erfinder: FAHRBACH, Florian, 35578 Wetzlar (DE)
(74) Vertreter: Schaumburg und Partner Patentanwälte mbB
(86) Internationale Anmeldenummer: PCT/EP2021/072502
(87) Internationale Veröffentlichungsnummer: WO 2022/034174

(56) Entgegenhaltungen:
- EP-A1- 3 081 975
- WO-A1-2017/013054
- WO-A1-2020/063895

## Beschreibung

Die Erfindung betrifft ein Verfahren und eine optische Vorrichtung zur Erzeugung von Lichtblättern, wie sie beispielsweise in der Lichtblattmikroskopie verwendet werden.

Ein Lichtblatt kann durch Fokussierung eines Lichtstrahls, insbesondere eines Laserstrahls, nur in einer Raumrichtung erzeugt werden. Durch diese Art der Fokussierung entsteht eine Lichtscheibe, die nur eine dünne Schicht einer Probe beleuchtet. Die Dicke eines Lichtblattes beträgt typischerweise zwischen etwa einigen hundert Nanometern und einigen Mikrometern.

Um die Probe zu scannen oder um Verschattungen zu vermeiden, werden mehrere unterschiedlich orientierte Lichtblätter erzeugt. Hierzu werden üblicherweise Mechaniken mit beweglichen Elementen, beispielsweise mit beweglichen Spiegeln, eingesetzt. Diese Mechaniken sind teuer, aufwändig zu justieren und fehleranfällig.

Die WO 2020/063895 zeigt ein Gerät zur Erzeugung mehrere Lichtblätter, die eine Probe in unterschiedlichen Ebenen beleuchten. Dazu wird ein Lichtblatt aus einem Eingangslichtstrahl an einer Zylinderlinse geformt. Ferner kommt ein beweglicher Scan-Spiegel bzw. ein Retroreflektor und eine modulierende Encoder-Vorrichtung zum Einsatz.

Es ist daher wünschenswert, Vorrichtungen und Verfahren zu schaffen, mit denen Lichtblätter einfach erzeugt werden können und die nicht verschleißanfällig sind.

Gemäß einem Aspekt der Erfindung wird dies ermöglicht durch eine optische Vorrichtung zur Erzeugung von Lichtblättern, mit einem optischen Teilsystem, das an seinem Ausgang eine Mehrzahl von kollimierten Lichtstrahlen aufweist, die auf einen gemeinsamen Punkt zulaufen, mit einem Retroreflektor, der einen Strahleingang, an dem die Lichtstrahlen in den Retroreflektor eingekoppelt sind, und einen Strahlausgang, an dem die Lichtstrahlen aus dem Retroreflektor austreten, aufweist, wobei die im Retroreflektor von den Lichtstrahlen zwischen dem Strahleingang und dem Strahlausgang zurückgelegte Weglänge abhängig vom Einfallswinkel des jeweiligen Lichtstrahls am Strahleingang ist, und mit einer Lichtblattoptik, in die sich die vom Strahlausgang des Retroreflektors ausgehenden Lichtstrahlen erstrecken, wobei an einem Ausgang der Lichtblattoptik aus jedem Lichtstrahl ein unterschiedlich ausgerichtetes Lichtblatt geformt ist.

Gemäß einem weiteren Aspekt der Erfindung wird ein Nachrüstsatz für ein Lichtblatt-Mikroskop bereitgestellt, mit einem optischen Teilsystem, das an seinem Ausgang eine Mehrzahl von kollimierten Lichtstrahlen aufweist, die auf einen gemeinsamen Punkt zulaufen, mit einem Retroreflektor, der einen Strahleingang, an dem die Lichtstrahlen in den Retroreflektor eingekoppelt sind, und einen Strahlausgang, an dem die Lichtstrahlen aus dem Retroreflektor treten, aufweist, wobei die im Retroreflektor von den Lichtstrahlen zwischen dem Strahleingang und dem Strahlausgang zurückgelegte Weglänge abhängig vom jeweiligen Einfallswinkel des Lichtstrahls am Strahleingang ist und wobei der Nachrüstsatz in den Beleuchtungsstrahlengang des Lichtblatt-Mikroskops so anordenbar ausgestaltet ist, dass der Strahlausgang des Retroreflektors sich vor der Lichtblattoptik des Lichtblatt-Mikroskops befindet.

Schließlich ist ein Verfahren zum Erzeugen von Lichtblättern vorgesehen, vorzugsweise unter Verwendung der oben angegebenen optischen Vorrichtung, bei dem eine Mehrzahl von kollimierten Lichtpulsen, die auf einen gemeinsamen Punkt zulaufen, in einen Retroreflektor eingekoppelt werden und im Retroreflektor eine vom Einfallswinkel in den Retroreflektor abhängigen Weglänge zurücklegen, bevor sie aus dem Retroreflektor ausgekoppelt und in jeweils ein Lichtblatt umgeformt werden.

Mit einer solchen optischen Vorrichtung, einem solchen Nachrüstsatz und einem solchen Verfahren ist es möglich, eine Mehrzahl von Lichtblättern zu schaffen, ohne dass verschleißanfällige Mechaniken oder aufwändige optische Vorrichtungen verwendet werden.

Von Vorteil ist dabei, dass die Lichtstrahlen im Retroreflektor kollimiert sind, so dass die Lichtblätter auch bei großen Weglängen scharf fokussiert werden können. Dank der auf einen Punkt zulaufenden kollimierten Lichtstrahlen können allgemein übliche Lichtblattoptiken zur Erzeugung der Lichtblätter verwendet werden. Die vom Einfallswinkel abhängige Weglänge ermöglicht insbesondere eine Verwendung mit gepulsten Lichtquellen, denn die unterschiedlichen Weglängen führen zu Laufzeitdifferenzen und damit zu Lichtblättern, die zu unterschiedlichen Zeitpunkten erzeugt werden. Dies lässt sich nutzen, um inkohärente Lichtblätter aus vor dem Retroreflektor noch kohärenten Lichtstrahlen zu generieren oder um zeitlich und räumlich, beispielsweise in einer Tiefenrichtung, gestaffelte Lichtblätter zu erzeugen. Insgesamt ergibt sich damit eine Vorrichtung, die instantan und allein auf optischem Wege, und damit verschleißfrei, eine Mehrzahl von Lichtblättern erzeugt.

Ein Lichtstrahl im oben genannten Sinne stellt im Sinne der Strahlenoptik einen Strahlengang der optischen Vorrichtung oder des Nachrüstsatzes oder eine optische Achse dar, entlang der sich ein (kollimiertes) Strahlenbündel bewegt, ohne dass konkret ein Photonenstrahl oder eine elektromagnetische Welle vorhanden sein muss, die sich entlang des Lichtstrahls bewegt. Strahlengang und Lichtstrahlen sind auch vorhanden, wenn die optische Vorrichtung nicht im Betrieb ist. Da sich Licht entlang der Lichtstrahlen bewegt, wird im Folgenden der Ausdruck "Lichtstrahl" sowohl für den Strahlengang als auch für das sich entlang des Strahlengangs bewegende Licht verwendet.

Die Erfindung kann durch die folgenden jeweils für sich vorteilhaften, voneinander unabhängig und beliebig miteinander kombinierbaren Merkmale weiter verbessert werden. Dabei kann jedes Merkmal unterschiedslos sowohl für die optische Vorrichtung, den Nachrüstsatz und das Verfahren verwendet werden.

Gemäß einer ersten vorteilhaften Ausgestaltung können die Lichtstrahlen, insbesondere alle Lichtstrahlen, voneinander unterschiedliche Weglängen im Retroreflektor aufweisen.

Vorteilhaft ist ferner, wenn jeder Lichtstrahl einen unterschiedlichen Einfallswinkel aufweist, unter dem er in den Retroreflektor eintritt. Der Einfallswinkel ist dabei der Winkel zwischen dem Lichtstrahl und dem Lot auf die Spiegelfläche des Retroreflektors, auf die der Lichtstrahl trifft.

Um sicherzustellen, dass bei auf einen Punkt zulaufenden Lichtstrahlen jeder Lichtstrahl eine unterschiedliche Weglänge im Retroreflektor zurücklegt, kann die Weglänge eines Lichtstrahls im Retroreflektor eine streng monotone Funktion des Einfallswinkels sein. So kann die Weglänge umso kürzer sein, je kleiner der Einfallswinkel ist.

Diese drei Maßnahmen führen unabhängig voneinander dazu, dass aufgrund der unterschiedlichen Weglängen jeder Lichtstrahl zu einem anderen Zeitpunkt in die Lichtblattoptik eintritt und somit sowohl hinsichtlich seiner Lage und Orientierung bezüglich der optischen Achse als auch hinsichtlich seiner Phasenlage unterscheidbar wird und somit gezielt zur Erzeugung bestimmter Lichtblätter verwendet werden kann.

In einer weiteren vorteilhaften Ausgestaltung kann vorgesehen sein, dass die Lichtstrahlen am Strahlausgang im selben Winkel relativ zueinander verlaufen wie am Strahleingang. Dies beinhaltet die beiden Möglichkeiten, dass die Lichtstrahlen am Strahlausgang auf den gemeinsamen Punkt hin zusammenlaufen und dass die Lichtstrahlen von dem gemeinsamen Punkt auseinanderlaufen. Beides hat den Vorteil, dass durch den Retroreflektor der relative Verlauf der Lichtstrahlen zueinander nicht beeinträchtigt wird. Insbesondere kann der vom Strahlausgang zur Lichtblattoptik gerichtete Teil der Lichtstrahlen von dem gemeinsamen Punkt ausgehen.

In einer Ausgestaltung wird die optische Vorrichtung bzw. der Nachrüstsatz zur Erzeugung von Lichtblättern eingesetzt, die sich so überlagern, dass Verschattungen durch die Probe verringert oder gar eliminiert werden. Hierzu ist es von Vorteil, wenn die aus den unterschiedlichen Lichtstrahlen erzeugten Lichtblätter unterschiedliche Ausbreitungsrichtungen aufweisen. Alternativ oder kumulativ können die Lichtblätter koplanar sein.

Einzelne, bevorzugt alle Lichtstrahlen können zumindest abschnittsweise zwischen dem optischen Teilsystem und der Lichtblattoptik in einer Ebene liegen, also koplanar zueinander verlaufen. Insbesondere liegen die Lichtstrahlen unmittelbar vor (also lichtquellenseitig) der Lichtblattoptik in einer Richtung bzw. Ebene nebeneinander, die parallel zu der Raumrichtung liegt, in der die Lichtstrahlen durch beispielsweise eine Zylinderlinse der Lichtblattoptik fokussiert werden. Auf diese Weise werden im Zusammenspiel mit einem Objektiv der Lichtblattoptik koplanare Lichtblätter mit unterschiedlicher Orientierung erzeugt.

Die Lichtstrahlen sollten am Strahlausgang ebenfalls kollimiert sein, damit die Foki der Lichtblätter nicht in verschiedenen Abständen zum Objektiv liegen.

Eine kompakte Bauweise lässt sich erreichen, wenn Strahleingang und Strahlausgang zusammenfallen, die Lichtstrahlen also an der Stelle in den Retroreflektor eintreten, an der sie den Retroreflektor auch wieder verlassen. Bei einer solchen Bauweise kann ein Strahlteiler zwischen Strahlausgang und Lichtblattoptik vorgesehen sein. Den Retroreflektor verlassende Lichtstrahlen sind bevorzugt vom Strahlteiler zur Lichtblattoptik hin umgelenkt. Zum Strahleingang gerichtete Lichtstrahlen können durch den Strahlteiler verlaufen.

Gemäß einer weiteren vorteilhaften Ausgestaltung kann der gemeinsame Punkt mit dem Strahleingang zusammenfallen. Dies erlaubt es, die Abmessungen des Strahleingangs klein zu halten. Der gemeinsame Punkt kann insbesondere auf einer Spiegeloberfläche des Retroreflektors liegen. Der gemeinsame Punkt liegt bevorzugt auf der optischen Achse des optischen Teilsystems, die mit der optischen Achse der Lichtblattoptik bevorzugt zusammenfällt.

Für eine kompakte Bauweise der optischen Vorrichtung bzw. des Nachrüstsatzes ist es von Vorteil, wenn bei wenigstens einigen der Lichtstrahlen ein am Strahleingang endender Teil des in den Retroreflektor eintretenden Lichtstrahls und ein am Strahlausgang beginnender Teil desselben, aus dem Retroreflektor austretenden Lichtstrahls deckungsgleich sind.

Gemäß einer besonders einfachen und kompakten Bauweise kann der Retroreflektor zwei ebene und/oder um nur eine Raumrichtung zueinander verkippte Spiegel aufweisen. Die Lichtstrahlen können im Retroreflektor eine Umkehrstelle aufweisen, an der sich die Ausbreitungsrichtung der Lichtstrahlen umkehrt. Bei dieser Ausgestaltung werden die Lichtstrahlen im Retroreflektor bis zur Umkehrstelle zunächst vom Strahleingang weg und dann ab der Umkehrstelle wieder zurück zum Strahleingang reflektiert. Die Spiegel können dabei an jeder Stelle voneinander beabstandet sein. Die Spiegel sind an der Umkehrstelle bevorzugt weniger weit voneinander beabstandet als am Strahleingang und/oder am Strahlausgang. Um die Baugröße klein zu halten, können Strahleingang und Strahlausgang am selben Ende des Retroreflektors angeordnet sein. Die Umkehrstelle ist in Richtung des anderen Endes vom Strahleingang und Strahlausgang beabstandet. Die Entfernung der Umkehrstelle von Strahleingang und/oder Strahlausgang kann dabei abhängig vom Einfallswinkel des Lichtstrahls sein.

Um möglichst große Weglängen bzw. Weglängenunterschiede im Retroreflektor zu erzeugen, ist der Winkel, um den die Spiegel zueinander verkippt sind, bevorzugt kleiner als der Winkel zwischen den am weitesten auseinanderliegenden Lichtstrahlen. Beispielsweise kann der Winkel, um den die Spiegel zueinander verkippt sind, kleiner als 10⁻² rad und/oder größer als 10⁻⁴ rad sein. In einer anderen Ausgestaltung ist der Winkel, um den die Spiegel zueinander verkippt sind, kleiner als 10 Grad bzw. kleiner als 5 Grad. Der Winkel, um den die Spiegel zueinander verkippt sind, bestimmt die Weglängendifferenz zwischen den Lichtstrahlen im Retroreflektor. Die Weglängendifferenz, und damit der Winkel, um den die Spiegel zueinander verkippt sind, wird in den meisten Fällen abhängig von der Kohärenzlänge des Lichts der Lichtquelle eingestellt werden.

Gemäß einer weiteren Ausgestaltung kann vorgesehen sein, dass der Einfallswinkel zumindest einiger, bevorzugt aller Lichtstrahlen ein unterschiedlich ganzzahlig Vielfaches des Winkels ist, um den die Spiegel zueinander verkippt sind. Bei einer derartigen Ausgestaltung verlaufen die in den Retroreflektor am Strahleingang einfallenden und die den Retroreflektor am Strahlausgang verlassenden Lichtstrahlen deckungsgleich.

Die optische Vorrichtung bzw. der Nachrüstsatz kann eine insbesondere motorisierte Verstellvorrichtung aufweisen, die ausgestaltet ist, den Winkel zwischen den Spiegel zu verstellen. Zur Steuerung der Verstellvorrichtung kann eine elektronische Steuereinheit vorgesehen sein. Die Verstellvorrichtung kann ein Antriebselement, beispielsweise einen Motor oder einen anderen Aktuator aufweisen, die auf wenigstens einen Spiegel einwirkt. Die Verstellvorrichtung erlaubt es, die relative Lage und/oder Orientierung und/oder der in die Lichtblattoptik einfallenden Lichtstrahlen und/oder die Weglängen und/oder die Weglängenunterschiede im Retroreflektor an die jeweiligen Erfordernisse anzupassen. Beispielsweise kann der Winkel, um den die beiden Spiegel des Retroreflektors zueinander verkippt sind, abhängig von einer Kohärenzlänge des Lichts der Lichtstrahlen, eines Spektrums des Lichts der Lichtstrahlen und/oder von der Anzahl, Orientierung und/oder Lage der zu erzeugenden Lichtblätter mittels der Verstellvorrichtung automatisch verändert werden.

Zwischen den beiden Spiegelflächen kann der Retroreflektor ein mit einem gasförmigen Medium gefülltes oder ein vakuumgefülltes Volumen aufweisen, das nach außen hin abgedichtet sein kann. Alternativ können sich die Lichtstrahlen im Retroreflektor auch durch Glas erstrecken. Beispielsweise kann der Retroreflektor aus Glas, insbesondere aus einem Glasblock, gefertigt sein, beispielsweise in monolithischer Bauweise. Auf zwei sich gegenüberliegenden Oberflächen des Glasblocks können Spiegel aufgebracht oder zwei sich gegenüberliegende Oberflächen des Glasblocks können verspiegelt sein.

Der gemeinsame Punkt, auf den die Lichtstrahlen zulaufen, liegt bevorzugt in einer hinteren (lichtquellenseitigen) Brennebene oder einer dazu optisch konjugierten Ebene der Lichtblattoptik, insbesondere einer Zylinderlinse der Lichtblattoptik. Die Zylinderlinse kann sich an dem der Retroreflektor zugewandten Ende der Lichtblattoptik, also an deren Eingang befinden. Die Zylinderlinse kann sich insbesondere zwischen dem Retroreflektor und einem Mikroskopobjektiv befinden.

Die optische Vorrichtung und der Nachrüstsatz können verwendet werden, um die Lichtblätter aus ursprünglich zueinander kohärenten Lichtstrahlen zu erzeugen und interferenzfrei koplanar zu überlagern. Eine solche Überlappung kann beispielsweise dazu dienen, Verschattungen zu vermeiden. Dies kann gemäß einer vorteilhaften Ausgestaltung dadurch erreicht werden, dass die kürzeste Differenz zwischen den Weglängen unterschiedlicher Lichtstrahlen größer ist als die Kohärenzlänge des Lichts der Lichtstrahlen. Zur Vermeidung von Verschattungen sind die Lichtblätter bevorzugt koplanar.

Die Lichtquelle kann Teil der optischen Vorrichtung sein.

Von Vorteil ist ferner, wenn die Lichtquelle ausgestaltet ist, Lichtpulse zu erzeugen, bzw. wenn die Lichtquelle eine gepulste Lichtquelle ist. Bei dieser Ausgestaltung ist die optische Vorrichtung, insbesondere der Retroreflektor, ausgestaltet, aus ursprünglich synchronen Lichtpulsen entlang der Lichtstrahlen am Strahleingang aufgrund der im Retroreflektor unterschiedlichen Weglänge am Strahlausgang zeitlich aufeinanderfolgende Lichtpulse entlang der Lichtstrahlen zu erzeugen. Der zeitliche Abstand zwischen den aufeinanderfolgenden Lichtpulsen ergibt sich aus der Weglängendifferenz im Retroreflektor. Die Lichtblattoptik ist ausgestaltet, aus den zeitlich aufeinanderfolgenden, entlang der Lichtstrahlen propagierenden Lichtpulse zeitlich aufeinanderfolgende, gepulste Lichtblätter zu erzeugen. Die Lichtpulse entlang unterschiedlicher Lichtstrahlen sind am Strahlausgang des Retroreflektors zeitlich zueinander versetzt. Die Lichtblätter werden so aus Lichtpulsen erzeugt, die nacheinander die Lichtblattoptik erreichen. Diese Maßnahme erlaubt es, eine Probe mithilfe mehrerer aufeinanderfolgender Lichtblätter zu scannen, ohne dass fehleranfällige Mechaniken notwendig sind.

Bei der Lichtquelle handelt es sich bevorzugt um einen Laser, beispielsweise einen Gaslaser oder einen Diodenlaser.

Das optisches Teilsystem kann ausgestaltet sein, einen Eingangsstrahl, beispielsweise einen Laserstrahl, in die Lichtstrahlen aufzuspalten. Beispielsweise kann das optische Teilsystem eine insbesondere linienhafte Linsenanordnung, insbesondere eine Mikrolinsenanordnung, und/oder einen oder mehrere Strahlteiler, wie Gitter oder teildurchlässige Spiegel aufweisen, die auch in kaskadiert angeordnet sein können. Die Linsen der Linsenanordnung können Zylinderlinsen sein. Die Verwendung von Zylinderlinsen im optischen Teilsystem ist nicht notwendig, wenn die Lichtblattoptik eine Zylinderlinse aufweist.

Am Ausgang des optischen Teilsystems liegen die Lichtstrahlen bevorzugt in einer Ebene nebeneinander.

Das optische Teilsystem kann an seinem Ausgang eine Linse oder ein Linsensystem aufweisen, durch die die Lichtstrahlen hindurchreichen und die eine Kollimierung der Lichtstrahlen sicherstellt sowie die einzelnen Lichtstrahlen entsprechend ihres Abstands zur optischen Achse hin ablenkt, so dass sie durch den gemeinsamen Punkt auf der optischen Achse verlaufen.

Um kollimierte Lichtstrahlen zu erzeugen, kann das optische Teilsystem eine Kollimationseinrichtung aufweisen.

Die optische Vorrichtung in einer der oben beschriebenen Ausgestaltungen kann Teil eines Mikroskops und insbesondere im Beleuchtungsstrahlengang angeordnet sein. Das Mikroskop kann eine Detektoroptik aufweisen, deren optische Achse bevorzugt senkrecht zur Ebene der von der Lichtblattoptik erzeugten Lichtblätter ausgerichtet ist.

Das Mikroskop kann in einer weiteren Ausgestaltung eine Lichtquelle aufweisen, die ausgestaltet ist, Licht mit einer vorbestimmten Kohärenzlänge zu erzeugen, wobei die Lichtstrahlen aus dem Licht der Lichtquelle erzeugt sind.

Im Folgenden ist die Erfindung anhand einer Ausführungsform mit Bezug auf die Zeichnungen beispielhaft erläutert. In der Beschreibung und den Zeichnungen sind für Merkmale, die einander hinsichtlich Aufbau und/oder Funktion entsprechen, dieselben Bezugszeichen verwendet.

Nach Maßgabe der obigen Ausführungen können einzelne bei der beispielhaften Ausführungsform realisierte Merkmale weggelassen werden, wenn es auf deren technischen Effekt bei einer bestimmten Anwendung nicht ankommen sollte. Umgekehrt können Merkmale aus der obigen Beschreibung der beispielhaften Ausführungsform hinzugefügt werden, wenn es auf den mit diesen Merkmalen verknüpften technischen Effekt einer bestimmten Anwendung ankommen sollte.

Es zeigen:
- Fig. 1: eine schematische Darstellung einer Ausführungsform einer optischen Vorrichtung;
- Fig. 2: eine schematische Darstellung der optischen Vorrichtung in Blickrichtung II-II der Fig. 1;
- Fig. 3: eine schematische Draufsicht der optischen Vorrichtung der Fig. 1 entlang des Pfeils III;
- Fig. 4: eine schematische Darstellung eines Ablaufplans für ein Verfahren zur Erzeugung von Lichtblättern.

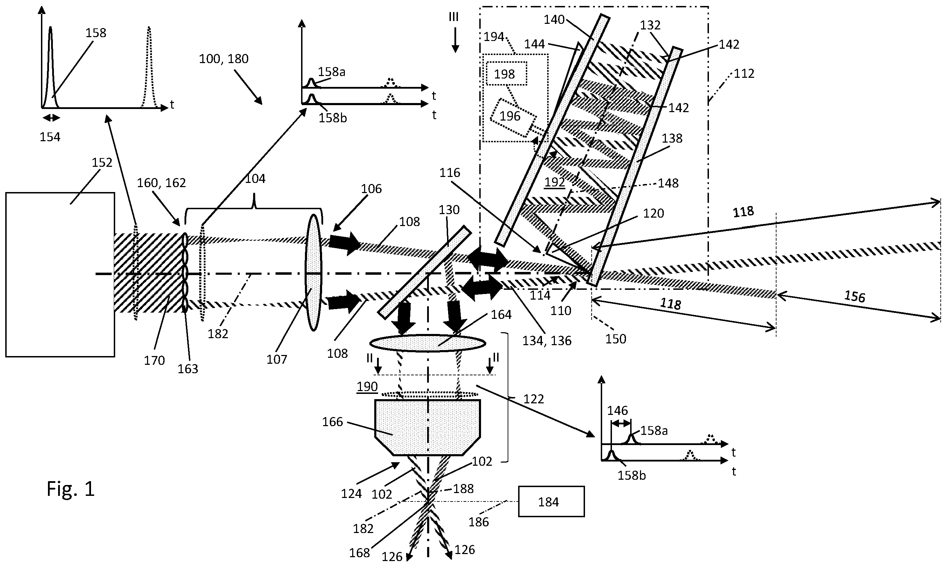

Im Folgenden sind Aufbau und Funktion einer optischen Vorrichtung 100 anhand der Fig. 1 bis 3 erläutert.

Die optische Vorrichtung 100 dient dazu, eine Mehrzahl von Lichtblättern 102 zu erzeugen. Bevorzugt dient die optische Vorrichtung 100 dazu, koplanare und inkohärente Lichtblätter 102, die eine unterschiedliche Ausbreitungsrichtung 126 aufweisen, aus Lichtstrahlen 108, insbesondere Lichtpulsen 158, 158a, 158b zu erzeugen. Dabei wird aus jedem Lichtstrahl 108 ein Lichtblatt 103 generiert. Alternativ kann die optische Vorrichtung 100 auch dazu eingesetzt werden, aus den Lichtstrahlen 108 parallele und voneinander beabstandete Lichtblätter 102 zu erzeugen.

Die optische Vorrichtung 100 weist ein optisches Teilsystem 104 auf, das an seinem Ausgang 106 eine Mehrzahl von kollimierten Lichtstrahlen 108 aufweist, die auf einen gemeinsamen Punkt 110 zulaufen. Ein Lichtstrahl 108 repräsentiert dabei eine optische Achse, entlang der sich ein kollimiertes Strahlenbündel bewegt. Die Lichtstrahlen liegen am Ausgang des optischen Teilsystems, an dem sie das optische Teilsystem in Richtung Retroreflektor 112 verlassen, bevorzugt in einer Ebene nebeneinander.

An seinem Ausgang 106 kann das optische Teilsystem 104 eine Linse 107 aufweisen, die dafür sorgt, dass die das optische Teilsystem 104 zum Retroreflektor 112 verlassenden Lichtstrahlen 108 kollimiert sind und auf den Punkt 110 zulaufen.

Die optische Vorrichtung 100 weist ferner einen Retroreflektor 112 auf. An einem Strahleingang 114 des Retroreflektors 112 sind die Lichtstrahlen 108 in den Retroreflektor 112 eingekoppelt. An einem Strahlausgang 116 treten die Lichtstrahlen 108 aus dem Retroreflektor 112 wieder aus. Zwischen dem Strahleingang 114 und dem Strahlausgang 116 liegen die Lichtstrahlen im Retroreflektor eine Weglänge 118 zurück, die von einem Einfallswinkel 120 des jeweiligen Lichtstrahls am Strahleingang 114 abhängig ist.

Fig. 1 zeigt exemplarisch zwei Lichtstrahlen. Die Anzahl der Lichtstrahlen 108 ist jedoch beliebig groß und hängt beispielsweise vom jeweiligen Einsatzzweck der optischen Vorrichtung 100 und der Anzahl der benötigten Lichtblätter 102 ab. Die Weglängen 118 sind in Fig. 1 rechts vom Retroreflektor 112 abgewickelt dargestellt, um ihre Weglängen einfacher miteinander vergleichen zu können. Tatsächlich ist die Weglänge 118 durch den zickzackförmigen Strahlengang des jeweiligen Lichtstrahls 108 im Retroreflektor 112 bestimmt.

Die optische Vorrichtung 100 weist ferner eine Lichtblattoptik 122 auf, in die sich die Lichtstrahlen 108 vom Strahlausgang 116 des Retroreflektors 112 erstrecken. Die Lichtblattoptik 122 erzeugt aus den Lichtstrahlen 108 unterschiedlich ausgerichtete Lichtblätter 102 an ihrem Ausgang 124.

Die optische Vorrichtung 100 kann Teil eines Lichtblattmikroskops 180 sein und beispielsweise einen Beleuchtungsstrahlengang 182 des Lichtblattmikroskops 180 bilden bzw. im Beleuchtungsstrahlengang angeordnet sein.

Die optische Vorrichtung 100 kann auch als ein Nachrüstsatz für ein Lichtblattmikroskop 180 ausgestaltet sein, das noch nicht mit einer optischen Vorrichtung 100 ausgestattet ist. Der Nachrüstsatz weist die optische Vorrichtung 100 bzw. deren noch zusammenzubauenden Bestandteile auf und ist im Beleuchtungsstrahlengang 182 des Lichtblattmikroskops anordenbar ausgestaltet.

Das Lichtblattmikroskop 180 kann mit einer Detektoroptik 184 ausgestattet sein, deren optische Achse 186 senkrecht zur optischen Achse 188 der Lichtblattoptik 122 ausgerichtet ist.

Die optische Vorrichtung 100 kann eine Lichtquelle 152 aufweisen. Die Lichtquelle 152 kann eine gepulste Lichtquelle sein, die Lichtpulse 158 erzeugt. Beispielsweise kann die Lichtquelle ein Laser, wie ein Gaslaser oder ein Diodenlaser sein.

Die Lichtquelle 152 erzeugt bevorzugt Licht mit einer Kohärenzlänge 154, die von der Bauart und/oder einer Betriebsart der Lichtquelle abhängt.

Das optische Teilsystem 104 ist in der dargestellten Variante ausgebildet, aus einem Eingangslichtstrahl 170 eine Mehrzahl von Lichtstrahlen 108 zu erzeugen. Hierzu kann eine optische Einrichtung 160 zum Aufspalten des Lichtstrahls vorgesehen sein, beispielsweise eine insbesondere linienhafte Linsenanordnung 162, wie eine Mikrolinsenanordnung, und/oder eine Anordnung von Strahlteilern, wie beispielsweise Gitter oder teildurchlässige Spiegel. Die Strahlteiler können auch kaskadiert angeordnet sein. In Fig. 1 ist lediglich beispielhaft eine Mikrolinsenanordnung dargestellt. Die Linsen 163 der Linsenanordnung 162 können Zylinderlinsen sein. In diesem Fall sind die Lichtstrahlen in der Zeichenebene fokussiert und senkrecht dazu kollimiert.

Wenn Linsen 163 der Linsenanordnung 162 Zylinderlinsen sind, dann würde der alleinige Einsatz einer Linse 107 die senkrecht zur Zeichenebene kollimierten Strahlen fokussieren (ungefähr auf den Punkt 110), was unerwünscht ist. Daher kann in diesem Fall vorteilhafterweise quellenseitig der Linse 107 noch eine weitere (Zylinder-)Linse oder eine Anordnung von (Zylinder-)Linsen vorgesehen sein, die in Richtung senkrecht zur Zeichenebene in die hintere (lichtquellenseitige) Brennebene der Linse 107 fokussieren, allerdings stärker als die Linsenanordnung 162 bzw. deren Linsen 163 in der Zeichenebene fokussieren, damit in der Probe ein Lichtblatt entsteht.

Wird von der Lichtquelle 152 ein Lichtpuls 158 entlang des Eingangslichtstrahles 170 erzeugt, so wird dieser durch die optische Vorrichtung 160 in unterschiedliche Lichtpulse 158a, 158b aufgespalten, die insbesondere zueinander synchron sein können und entlang der unterschiedlichen Lichtstrahlen 108 propagieren.

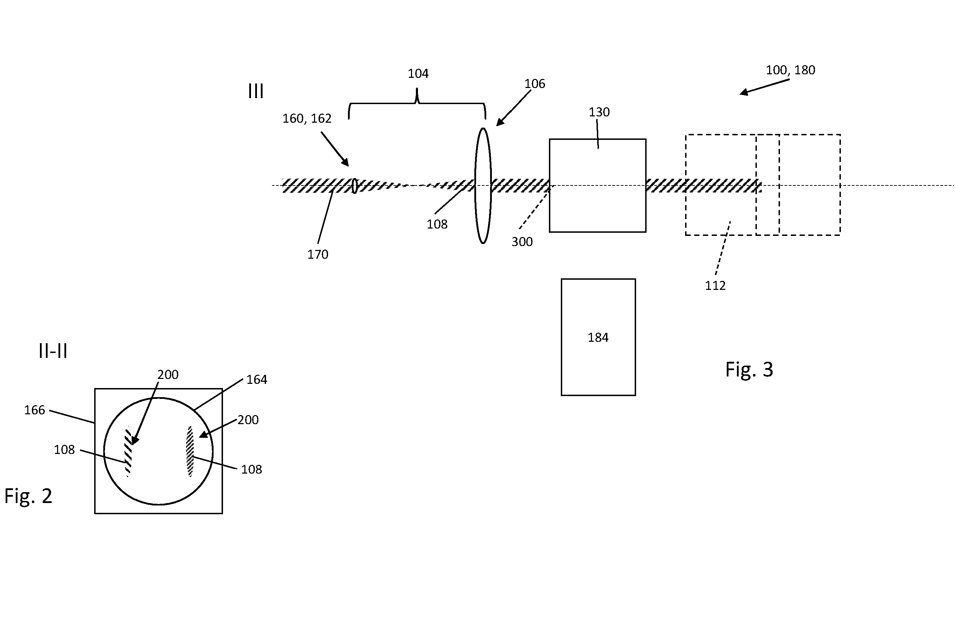

Wie aus den Fig. 1 und 3 hervorgeht, liegen die einzelnen Lichtstrahlen 108 zumindest abschnittsweise, bevorzugt über den gesamten Beleuchtungsstrahlengang 182, zumindest aber vor dem Eintritt in die Lichtblattoptik 122 nebeneinander in einer Ebene 300, die in Fig. 3 senkrecht zur Zeichenblattebene liegt und durch eine gestrichelte Linie angedeutet ist. Insbesondere liegen die Lichtstrahlen 108 zwischen dem Strahlausgang 116 des Retroreflektors 112 und der Lichtblattoptik 122 ebenfalls in einer Ebene, bevorzugt der Ebene 300, oder auch einer dazu rotierten Ebene.

Die Lichtblattoptik 122 weist eine hintere Brennebene 150 oder eine dazu optisch konjugierte Ebene auf, in der der Punkt 110 liegt, auf den die von dem optischen Teilsystem 104 erzeugten kollimierten Lichtstrahlen 108 zulaufen.

Die Lichtblattoptik 122 kann eine Zylinderlinse 164 aufweisen. Der Punkt 110 kann sich insbesondere in der hinteren Brennebene 150 oder einer dazu optisch konjugierten Ebene dieser Zylinderlinse 164 befinden.

Ferner kann die Lichtblattoptik 122 ein Objektiv 166, das auch als Mikroskopobjektiv bezeichnet werden kann, aufweisen. In einer Pupille 200 (Fig. 2) des Objektivs 166 liegen die Lichtstrahlen 108 nebeneinander. Das entlang der Lichtstrahlen 108 propagierende Licht hat in der Pupille 200 an jeden Lichtstrahl 108 einen elliptischen Querschnitt 202.

Die von der Lichtblattoptik erzeugten Lichtblätter 122 schneiden sich. Bevorzugt sind die Lichtblätter 102 koplanar zueinander angeordnet und weisen eine unterschiedliche Ausbreitungsrichtung 126 auf. Die Ausbreitungsrichtungen 126 der Lichtblätter 102 liegen also in einer gemeinsamen Ebene. Die Lichtblätter schneiden sich dann bevorzugt in einem Probenvolumen 168, das insbesondere auf der optischen Achse 186 der Detektoroptik 184 liegen kann. Dies ist beispielsweise der Fall, wenn die Ebene 300 parallel zu einer Ebene 190 verläuft, in der die Zylinderlinse 164 fokussiert. In Fig. 1 ist dies die Zeichenblattebene.

Die Zylinderlinse 164 erzeugt elliptische Foki, wie in Fig. 2 gezeigt. Der elliptische Querschnitt der Foki dreht sich bei Durchtritt durch das Objektiv 166 um 90 Grad. Die Lichtblätter liegen dann übereinander und sind in der Richtung entlang der langen Achse der Ellipsen stärker fokussiert, also dünner. Dies kann auch so beschrieben werden, dass in der hinteren Brennebene des Objektivs, also lichtquellenseitig, mehrere Lichtblätter mit elliptischem Querschnitt parallel zueinander liegen. Die Ellipsen werden nach Durchtritt durch das Objektiv 166 um 90 Grad gedreht und liegen dann in der Fokuseben des Objektivs übereinander.

Durch koplanare und zueinander verschwenkte Lichtblätter 102 werden Streifenartefakte vermieden, die durch Abschattung und Refraktion eines Lichtblattes aufgrund von Objekten im Probenvolumen 168 erzeugt werden. Das Probenvolumen 168 wird aus unterschiedlichen Winkeln, aber koplanar durch die Lichtblätter 102 beleuchtet, so dass sich die Verschattungen minimieren.

Bei sich überlagernden Lichtblättern 102 sollte darauf geachtet werden, dass die einzelnen Lichtblätter 102 inkohärent zueinander sind, um Interferenzen zu vermeiden. Dies wird einfach dadurch erreicht, dass die kleinste Weglängendifferenz 156 zwischen allen zur Erzeugung von Lichtblättern 102 verwendeten Lichtstrahlen 108 größer ist als die Kohärenzlänge 154 des Lichts der Lichtstrahlen 108.

Erzeugt die Lichtquelle 152 beispielsweise eine zeitliche, t, Abfolge von Eingangslichtpulsen 158 mit einer Kohärenzlänge 154, so sollten die einzelnen zur Erzeugung von Lichtblättern 102 verwendeten Lichtpulse 158a, 158b, in die ein Eingangslichtpuls 158von dem optischen Teilsystem 104 aufgespalten ist, wenigstens eine Kohärenzlänge 154 zeitlich voneinander beabstandet sein.

Der Retroreflektor 112 dient also dazu, am Strahlausgang 116 zueinander inkohärente Lichtstrahlen 108 aus am Strahleingang 114 zueinander kohärenten Lichtstrahlen 108 zu erzeugen.

Dies wird dadurch erreicht, dass die Lichtstrahlen 108 in einem unterschiedlichen Einfallswinkel 120 in den Retroreflektor 112 eingekoppelt werden und die Weglänge 118 im Retroreflektor 112 abhängig vom Einfallswinkel 120 ist. Der Retroreflektor 112 wandelt folglich einen Unterschied im Einfallswinkel 120 in eine Weglängendifferenz 156 um. Das entlang der Lichtstrahlen 108 propagierende Licht ist dann inkohärent, wenn sämtliche Weglängendifferenzen 156 zwischen den Lichtstrahlen 108 im Retroreflektor 112 größer sind als die Kohärenzlänge 154.

Grundsätzlich kann der Retroreflektor 112 eine beliebige Bauweise aufweisen, beispielsweise als Triple-Spiegel oder Triple-Prisma, als Katzenauge oder als Lüneburg-Linse. Es ist jedoch bevorzugt, dass der Retroreflektor ausgestaltet ist, bei geringen Änderungen des Einfallswinkels benachbarter Lichtstrahlen bereits große Weglängendifferenzen 156 zwischen diesen Lichtstrahlen zu erzeugen. Außerdem ist es bevorzugt, dass die Winkelverhältnisse, die am Strahleingang 114 zwischen den einzelnen kollimierten Lichtstrahlen bestehen, auch am Strahlausgang 116 erhalten bleiben. Der Retroreflektor 112 sollte also die relative Lage und Orientierung der einzelnen Lichtstrahlen 108 zueinander nicht verändern. Schließlich wäre es von Vorteil, wenn der Strahleingang 114 nicht weit vom Strahlausgang 116 des Retroreflektors 112 entfernt ist, so dass eine kompakte Bauform möglich bleibt.

Der in Fig. 1 beispielhaft dargestellte Retroreflektor 112 erfüllt diese Anforderungen.

Der Retroreflektor 112 weist bei dem dargestellten Ausführungsbeispiel zwei plane Spiegel 138, 140 auf, die aus ihrer Parallellage um einen Winkel 144, der bevorzugt zwischen 10⁻⁴ und 10⁻² rad beträgt, zueinander verkippt sind. Auch Winkel von weniger als 10 Grad bzw. weniger als 5° sind möglich. Die Achse, um die die beiden Spiegel 138, 140 zueinander verkippt sind, liegt senkrecht zur Ebene 300 und verläuft parallel zu den Spiegelebenen. Das Volumen 192 zwischen den beiden Spiegeln kann gas- oder lüftgefüllt und nach außen hin abgedichtet sein. Der Retroreflektor 112 kann alternativ auch aus einem Glasblock gefertigt sein, so dass sich die Lichtstrahlen 108 im Retroreflektor 112 durch Glas erstrecken. In diesem Fall sind die Spiegel 138, 140 von zwei sich gegenüberliegenden, zueinander verkippten Flächen des Glasblocks gebildet.

Der Strahleingang 114 befindet sich bei dem dargestellten Ausführungsbeispiel an der Oberfläche 132 eines Spiegels 138. Eine von den sich gegenüberliegenden Spiegeln 138, 140 gleich beabstandete Mittenebene 148 zwischen den beiden Spiegeln 138, 140 steht senkrecht auf die Ebene 300 und verläuft schräg zum Beleuchtungsstrahlengang 182.

Der Punkt 110, auf den die kollimierten Lichtstrahlen 108 aufeinander zulaufen, kann sich vor oder in dem Retroreflektor 112 befinden. Bei der in Fig. 1 dargestellten Ausgestaltung befindet sich der Punkt 110 auf der Spiegeloberfläche 132, also am Strahleingang 114. An dieser Stelle befindet sich auch der Strahlausgang.

In Fig. 1 sind schematisch die Strahlengänge zweier Lichtstrahlen 108 im Retroreflektor 112 dargestellt.

Die Lichtstrahlen 108 werden zwischen den beiden Spiegeln 138, 140 hin und her reflektiert. Da sich der Abstand der beiden Spiegel in Richtung weg vom Strahleingang verringert, werden die Lichtstrahlen 108 weg vom Strahleingang in den Reflektor 112 reflektiert. Dabei verringert sich der Einfallswinkel aufgrund des Winkels 144 zunehmend bei jeder Reflexion an einem der Spiegel 138, 140. Die Lichtstrahlen 108 fallen also mit zunehmender Anzahl der Reflexionen immer steiler auf die Spiegel 138, 140, bis an einer Umkehrstelle 142 sich die Richtung des Lichtstrahls 108 im Retroreflektor 112 umkehrt und der Lichtstrahl 108 wieder zurück zum Strahleingang 114 reflektiert wird.

Auf dem Weg von der Umkehrstelle 142 zum Strahleingang 114 wird der Einfallswinkel auf den Spiegeln 138, 140 bei jeder Reflexion an einem der Spiegel 138, 140 wieder größer. Am Strahleingang 114 verlässt der retroreflektierte Lichtstrahl 108 den Retroreflektor 112 wieder.

Bei der in Fig. 1 darstellten Ausgestaltung fallen folglich Strahleingang 114 und Strahlausgang 116 räumlich zusammen.

Betrachtet man die zickzackförmige Reflexion der Lichtstrahlen 108 in diesem Retroreflektor 112 als räumliche Welle, so erhöht sich die Frequenz dieser räumlichen Welle bis zum Umkehrpunkt, um dann wieder abzunehmen. Aufgrund des nur sehr kleinen Winkels 144 findet eine hohe Zahl von Reflexionen statt, so dass die Weglängendifferenz 156 durch Einstellung des Winkels 144 an die Kohärenzlänge 154 angepasst werden kann.

Beträgt der Einfallswinkel eines Lichtstrahls 108 am Strahleingang 114 ein ganzzahlig Vielfaches des Winkels 144, so wird der Lichtstrahl 108 im Retroreflektor 112 deckungsgleich zurückreflektiert. In einer Ausgestaltung der optischen Vorrichtung 100 sind daher sämtliche Einfallswinkel 120 der Lichtstrahlen ein ganzzahlig Vielfaches des Winkels 144. Der in den Retroreflektor 112 einfallende Lichtstrahl 134, 108 ist damit deckungsgleich zum retroreflektierten Lichtstrahl 136, 108.

Ein Strahlteiler 130 im Beleuchtungsstrahlengang 182 reflektiert die vom Strahlausgang 116 kommenden Lichtstrahlen 108, 136 zur Lichtblattoptik 122, während die in Richtung des Strahleingangs 114 propagierenden Lichtstrahlen 108, 134 den Strahlteiler 130 passieren.

Aufgrund der unterschiedlich langen Reflexionswege im Retroreflektor 112 sind die in der Lichtblattoptik 122 eingehenden Lichtstrahlen 108 zeitlich voneinander versetzt bzw. dekohärent, wie oben bereits ausgeführt ist.

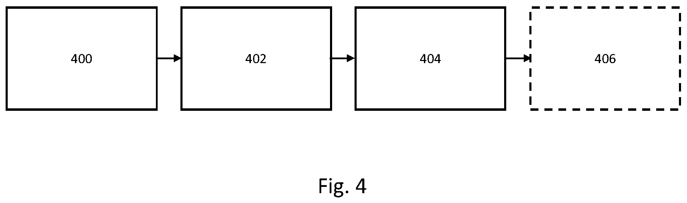

Gemäß Fig. 4 werden zur Erzeugung von Lichtblättern in einem ersten Schritt 400 eine Mehrzahl von kollimierten Lichtpulsen 158a, 158b, die auf den gemeinsamen Punkt 110 zulaufen, in einem Retroreflektor 112 eingekoppelt. Im Schritt 402 legen die Lichtpulse im Retroreflektor 112 eine von ihrem Einfallswinkel 120 abhängige Weglänge 118 zurück.

Anschließend werden sie in einem Schritt 404 aus dem Retroreflektor 112 ausgekoppelt und in jeweils ein Lichtblatt 102 umgeformt. Die Lichtblätter 102 können in einem Schritt 406 koplanar und mit unterschiedlichen Ausbreitungsrichtungen, die sich in einem Probenvolumen 168 schneiden, erzeugt werden.

Die optische Vorrichtung 100 kann eine Verstellvorrichtung 194 aufweisen, die ausgestaltet ist, den Winkel 144 zu ändern bzw. wenigstens einen der Spiegel 138, 140 zu verkippen. Die Verstellvorrichtung 194 kann ein auf wenigstens einen der Spiegel 138, 140 einwirkendes Antriebselement 196, beispielsweise einen Motor oder Aktuator, und eine das Antriebselement 196 steuernde Steuereinrichtung 198 aufweisen. Durch die Verstellung des Winkels 144 lässt sich die beispielsweise die Anzahl der Lichtblätter 102 oder die Weglängendifferenz 156 anpassen.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar.

### Bezugszeichen

- 100: optische Vorrichtung
- 102: Lichtblatt
- 104: optisches Teilsystem
- 106: Ausgang des optischen Teilsystems
- 107: Linse am Ausgang des optischen Teilsystems
- 108: Lichtstrahl
- 110: gemeinsamer Punkt, auf den Lichtstrahlen zulaufen
- 112: Retroreflektor
- 114: Strahleingang des Retroreflektors
- 116: Strahlausgang des Retroreflektors
- 118: Weglänge eines Lichtstrahls im Retroreflektor
- 120: Einfallswinkel eines Lichtstrahls in den Retroreflektor
- 122: Lichtblattoptik
- 124: Ausgang der Lichtblattoptik
- 126: Ausbreitungsrichtung eines Lichtblattes
- 130: Strahlteiler
- 132: Spiegeloberfläche
- 134: Abschnitt des Lichtstrahls
- 136: Abschnitt des Lichtstrahls
- 138: Spiegel
- 140: Spiegel
- 142: Umkehrstelle
- 144: Winkel, um den Spiegel zueinander verkippt sind
- 146: zeitlicher Versatz
- 148: Mittenebene
- 150: hintere Brennebene des Lichtblattobjektivs bzw. der Lichtblattoptik
- 152: Lichtquelle
- 154: Kohärenzlänge
- 156: Weglängendifferenz
- 158: Eingangslichtpuls
- 158a, 158b: aus dem Eingangslichtpuls erzeugte Lichtpulse
- 160: optische Einrichtung zum Aufspalten eines Lichtstrahls
- 162: Linsenanordnung
- 163: Zylinderlinse der Linsenanordnung
- 164: Zylinderlinse
- 166: Objektiv
- 168: Probenvolumen
- 170: Eingangslichtstrahl
- 180: Lichtblattmikroskop
- 182: Beleuchtungsstrahlengang
- 184: Detektoroptik
- 186: optische Achse der Detektoroptik
- 188: optische Achse der Lichtblattoptik
- 190: Ebene, in der Zylinderlinse fokussiert
- 192: Volumen zwischen den Spiegeln
- 194: Verstellvorrichtung
- 196: Antriebselement
- 198: Steuereinrichtung
- 200: Pupille
- 202: elliptischer Querschnitt
- 300: Ebene der Lichtstrahlen
- 400: Einkoppeln der Lichtstrahlen
- 402: Reflektieren der Lichtstrahlen abhängig vom Einfallswinkel
- 404: Erzeugen eines Lichtblattes
- 406: Erzeugen koplanarer, sich schneidender Lichtblätter

## Patentansprüche

1. Optische Vorrichtung (100) zur Erzeugung von Lichtblättern (102),
mit einem optischen Teilsystem (104), das an seinem Ausgang (106) eine Mehrzahl von kollimierten Lichtstrahlen (108) aufweist, die auf einen gemeinsamen Punkt (110) zulaufen,
mit einem Retroreflektor (112), der einen Strahleingang (114), an dem die Lichtstrahlen (108) in den Retroreflektor (112) eingekoppelt sind, und einen Strahlausgang (116), an dem die Lichtstrahlen (108) aus dem Retroreflektor (112) austreten, aufweist,
wobei die im Retroreflektor (112) von den Lichtstrahlen (108) zwischen dem Strahleingang (114) und dem Strahlausgang (116) zurückgelegte Weglänge (118) abhängig vom Einfallswinkel (120) des jeweiligen Lichtstrahls am Strahleingang (114) ist,
und mit einer Lichtblattoptik (122), in die sich die vom Strahlausgang (116) des Retroreflektors (112) ausgehenden Lichtstrahlen (108) erstrecken, wobei an einem Ausgang (124) der Lichtblattoptik (122) aus jedem Lichtstrahl (108) ein unterschiedlich ausgerichtetes Lichtblatt (102) geformt ist.

2. Optische Vorrichtung (100) nach Anspruch 1, wobei die Lichtstrahlen (108) unterschiedliche Weglängen (118) im Retroreflektor (112) aufweisen.

3. Optische Vorrichtung (100) nach Anspruch 1 oder 2, wobei die Lichtstrahlen (108) zwischen dem optischen Teilsystem (104) und der Lichtblattoptik (122) zumindest abschnittsweise in einer Ebene (300) liegen.

4. Optische Vorrichtung (100) nach einem der Ansprüche 1 bis 3, wobei der vom Strahlausgang (116) zur Lichtblattoptik (122) gerichtete Teil der Lichtstrahlen (108) von dem gemeinsamen Punkt (110) ausgeht.

5. Optische Vorrichtung (100) nach einem der Ansprüche 1 bis 4, wobei die aus den unterschiedlichen Lichtstrahlen (108) erzeugten Lichtblätter (102) unterschiedliche Ausbreitungsrichtungen (126) aufweisen.

6. Optische Vorrichtung (100) nach einem der Ansprüche 1 bis 5, wobei die Lichtblätter koplanar sind.

7. Optische Vorrichtung (100) nach einem der Ansprüche 1 bis 6, wobei Strahleingang (114) und Strahlausgang (116) zusammenfallen.

8. Optische Vorrichtung (100) nach einem der Ansprüche 1 bis 7, wobei der gemeinsame Punkt (110) mit dem Strahleingang (114) zusammenfällt.

9. Optische Vorrichtung (100) nach einem der Ansprüche 1 bis 8, wobei bei wenigstens einigen der Lichtstrahlen (108) ein am Strahleingang (114) endender Teil (134) des in den Retroreflektor (112) eintretenden Lichtstrahls (108) und ein am Strahlausgang (116) beginnender Teil (136) desselben, aus dem Retroreflektor (112) austretenden Lichtstrahls (108) deckungsgleich sind.

10. Optische Vorrichtung (100) nach einem der Ansprüche 1 bis 9, wobei der Retroreflektor (112) zwei zueinander verkippte Spiegel (138, 140) aufweist, und die Lichtstrahlen (108) im Retroreflektor (112) eine Umkehrstelle (142) aufweisen, in der sich die Richtung der Lichtstrahlen (108) umkehrt.

11. Optische Vorrichtung (100) nach einem der Ansprüche 1 bis 10, wobei der gemeinsame Punkt (110), auf den die Lichtstrahlen (108) zulaufen, in einer hinteren Brennebene (150) oder einer dazu optisch konjugierten Ebene der Lichtblattoptik (122) liegt.

12. Optische Vorrichtung (100) nach einem der Ansprüche 1 bis 11, wobei das Licht der Lichtstrahlen (108) eine Kohärenzlänge (154) aufweist, die kleiner ist als die kürzeste Differenz (156) zwischen den Weglängen (118) der Lichtstrahlen (108).

13. Optische Vorrichtung (100) nach einem der Ansprüche 1 bis 12, wobei das optisches Teilsystem (104) eine optische Einrichtung (160) aufweist, die ausgestaltet ist, einen Eingangsstrahl in die Lichtstrahlen (108) aufzuspalten.

14. Optische Vorrichtung (100) nach Anspruch 13, wobei die optische Einrichtung (160) eine Linsenanordnung (162) mit wenigstens einer Zylinderlinse (163) aufweist.

15. Lichtblatt-Mikroskop (180) mit einer optischen Vorrichtung (100) nach einem der Ansprüche 1 bis 14 im Beleuchtungsstrahlengang (182).

16. Nachrüstsatz für ein Lichtblatt-Mikroskop (180), mit einem optischen Teilsystem (104), das an seinem Ausgang (106) eine Mehrzahl von kollimierten Lichtstrahlen (108) aufweist, die auf einen gemeinsamen Punkt (110) zulaufen,
mit einem Retroreflektor (112), der einen Strahleingang (114), an dem die Lichtstrahlen (108) in den Retroreflektor (112) eingekoppelt sind, und einen Strahlausgang (116), an dem die Lichtstrahlen (108) aus dem Retroreflektor (112) treten, aufweist,
wobei die im Retroreflektor (112) von den Lichtstrahlen (108) zwischen dem Strahleingang (114) und dem Strahlausgang (116) zurückgelegte Weglänge (118) abhängig vom jeweiligen Einfallswinkel (120) des Lichtstrahls am Strahleingang (114) ist und
wobei der Nachrüstsatz in den Beleuchtungsstrahlengang (182) des Lichtblatt-Mikroskops (184) so anordenbar ausgestaltet ist, dass der Strahlausgang (116) des Retroreflektors (112) sich vor der Lichtblattoptik (122) des Lichtblatt-Mikroskops (184) befindet.

17. Verfahren zum Erzeugen von Lichtblättern (102), vorzugsweise unter Verwendung einer optischen Vorrichtung (100) nach einem der Ansprüche 1 bis 14, bei dem eine Mehrzahl von kollimierten Lichtpulsen (158a, 158b), die auf einen gemeinsamen Punkt zulaufen, in einen Retroreflektor (112) eingekoppelt werden und im Retroreflektor (112) eine vom Einfallswinkel (120) in den Retroreflektor (112) abhängigen Weglänge (118) zurücklegen, bevor sie aus dem Retroreflektor (112) ausgekoppelt und in jeweils ein Lichtblatt (102) umgeformt werden.

## Claims

1. Optical apparatus (100) for producing light sheets (102),
with an optical subsystem (104) having at its outlet (106) a plurality of collimated light beams (108), converging to a common point (110),
with a retroreflector (112) having a beam inlet (114) at which the light beams (108) are coupled into the retroreflector (112) and a beam outlet (116) at which the light beams (108) exit from the retroreflector (112),
wherein the path length (118), traveled in the retroreflector (112) by the light beams (108) between the beam inlet (114) and the beam outlet (116), is dependent on the respective angle of incidence (120) of the light beam at the beam inlet (114),
and with a light sheet optic (122) into which the light beams (108) emanating from the beam outlet (116) of the retroreflector (112) extend, wherein at an outlet (124) of the light sheet optic (122) a differently oriented light sheet (102) is formed from each light beam (108).

2. The optical apparatus (100) according to claim 1, wherein the light beams (108) have different path lengths (118) in the retroreflector (112).

3. The optical apparatus (100) according to claim 1 or 2, wherein the light beams (108) lie at least partially in a plane (300) between the optical subsystem (104) and the light sheet optic (122).

4. The optical apparatus (100) according to any one of claims 1 to 3, wherein the part of the light beams (108) directed from the beam outlet (116) to the light sheet optic (122) emanates from the common point (110).

5. The optical apparatus (100) according to any one of claims 1 to 4, wherein the light sheets (102), produced from the different light beams (108), have different propagation directions (126).

6. The optical apparatus (100) according to any one of claims 1 to 5, wherein the light sheets are coplanar.

7. The optical apparatus (100) according to any one of claims 1 to 6, wherein the beam input (114) and the beam outlet (116) coincide.

8. The optical apparatus (100) according to any one of claims 1 to 7, wherein the common point (110) coincides with the beam inlet (114).

9. The optical apparatus (100) according to any one of claims 1 to 8, wherein for at least some of the light beams (108), a part (134) of the light beam (108) entering the retroreflector (112) ending at the beam inlet (114) and a part (136) of the same light beam (108) exiting from the retroreflector (112) beginning at the beam outlet (116) are congruent.

10. The optical apparatus (100) according to any one of claims 1 to 9, wherein the retroreflector (112) has two mirrors (138, 140) tilted relative to one another, and the light beams (108) in the retroreflector (112) have a reversal point (142) in which the direction of the light beams (108) is reversed.

11. The optical apparatus (100) according to any one of claims 1 to 10, wherein the common point (110) to which the light beams (108) converge lies in a rear focal plane (150) or a plane of the light sheet optic (122) that is optically conjugate thereto.

12. The optical apparatus (100) according to any one of claims 1 to 11, wherein the light of the light beams (108) has a coherence length (154) which is smaller than the shortest difference (156) between the path lengths (118) of the light beams (108).

13. The optical apparatus (100) according to any one of claims 1 to 12, wherein the optical subsystem (104) comprises an optical apparatus (160), configured to split an input beam into the light beams (108).

14. The optical apparatus (100) according to claim 13, wherein the optical apparatus (160) comprises a lens arrangement (162) with at least one cylindrical lens (163).

15. Light sheet microscope (180) with an optical apparatus (100) according to any one of claims 1 to 14 in the illumination beam path (182).

16. Retrofit kit for a light sheet microscope (180), with an optical subsystem (104) having at its outlet (106) a plurality of collimated light beams (108), converging to a common point (110),
with a retroreflector (112) having a beam inlet (114) at which the light beams (108) are coupled into the retroreflector (112) and a beam outlet (116) at which the light beams (108) exit the retroreflector (112),
wherein the path length (118), travelled in the retroreflector (112) by the light beams (108) between the beam inlet (114) and the beam outlet (116), is dependent on the respective angle of incidence (120) of the light beam at the beam inlet (114), and
wherein the retrofit kit is configured to be arranged in the illumination beam path (182) of the light sheet microscope (184) such that the beam outlet (116) of the retroreflector (112) is located in front of the light sheet optic (122) of the light sheet microscope (184).

17. Method for producing light sheets (102), preferably using an optical apparatus (100) according to one of claims 1 to 14, in which a plurality of collimated light pulses (158a, 158b) converging to a common point, are coupled into a retroreflector (112) and travel a path length (118) in the retroreflector (112) which depends on the angle of incidence (120) into the retroreflector (112) before they are coupled out of the retroreflector (112) and each converted into a light sheet (102).

## Revendications

1. Appareil optique (100) pour la production de feuilles de lumière (102),
avec un sous-système optique (104) qui présente en sa sortie (106) une pluralité de faisceaux lumineux collimatés (108) qui se dirigent vers un point commun (110),
avec un rétroréflecteur (112) qui présente une entrée de faisceau (114), au niveau de laquelle les faisceaux lumineux (108) sont couplés au rétroréflecteur (112) et une sortie de faisceau (116), au niveau de laquelle les faisceaux lumineux (108) sortent du rétroréflecteur (112),
dans lequel la longueur de trajet (118) parcourue dans le rétroréflecteur (112) par les faisceaux lumineux (108) entre l'entrée de faisceau (114) et la sortie de faisceau (116) dépend de l'angle d'incidence (120) du faisceau lumineux respectif à l'entrée de faisceau (114),
et avec une optique à feuille de lumière (122) dans laquelle s'étendent les faisceaux lumineux (108) sortant de la sortie de faisceau (116) du rétroréflecteur (112), dans lequel une feuille de lumière (102) orientée différemment est formée en une sortie (124) de l'optique à feuille de lumière (122) à partir de chaque faisceau lumineux (108).

2. Appareil optique (100) selon la revendication 1, dans lequel les faisceaux lumineux (108) présentent différentes longueurs de trajet (118) dans le rétroréflecteur (112).

3. Appareil optique (100) selon la revendication 1 ou 2, dans lequel les faisceaux lumineux (108) se trouvent au moins par sections dans un plan (300) entre le sous-système optique (104) et l'optique à feuille de lumière (122).

4. Appareil optique (100) selon l'une quelconque des revendications 1 à 3, dans lequel la partie des faisceaux lumineux (108) dirigée de la sortie de faisceau (116) vers l'optique à feuille de lumière (122) part du point commun (110).

5. Appareil optique (100) selon l'une quelconque des revendications 1 à 4, dans lequel les feuilles de lumière (102) générées à partir des différents faisceaux lumineux (108) présentent des directions de propagation (126) différentes.

6. Appareil optique (100) selon l'une quelconque des revendications 1 à 5, dans lequel les feuilles de lumière sont coplanaires.

7. Appareil optique (100) selon l'une quelconque des revendications 1 à 6, dans lequel l'entrée de faisceau (114) et la sortie de faisceau (116) coïncident.

8. Appareil optique (100) selon l'une quelconque des revendications 1 à 7, dans lequel le point commun (110) coïncide avec l'entrée de faisceau (114).

9. Appareil optique (100) selon l'une quelconque des revendications 1 à 8, dans lequel pour au moins certains des faisceaux lumineux (108), une partie (134) du faisceau lumineux (108) entrant dans le rétroréflecteur (112) se terminant à l'entrée du faisceau (114) et une partie (136) du même faisceau lumineux (108) sortant du rétroréflecteur (112) commençant à la sortie du faisceau lumineux (116) sont congruentes.

10. Appareil optique (100) selon l'une quelconque des revendications 1 à 9, dans lequel le rétroréflecteur (112) présente deux miroirs (138, 140) inclinés l'un vers l'autre, et les faisceaux lumineux (108) dans le rétroréflecteur (112) présentent un point d'inversion (142), dans lequel la direction des faisceaux lumineux (108) s'inverse.

11. Appareil optique (100) selon l'une quelconque des revendications 1 à 10, dans lequel le point commun (110), vers lequel se dirigent les faisceaux lumineux (108) se trouve dans un plan focal arrière (150) ou un plan optiquement conjugué à celui-ci de l'optique à feuille de lumière (122).

12. Appareil optique (100) selon l'une quelconque des revendications 1 à 11, dans lequel la lumière des faisceaux lumineux (108) présente une longueur de cohérence (154) qui est inférieure à la différence la plus courte (156) entre les longueurs de trajet (118) des faisceaux lumineux (108).

13. Appareil optique (100) selon l'une quelconque des revendications 1 à 12, dans lequel le sous-système optique (104) présente un appareil optique (160) qui est configuré pour diviser un faisceau d'entrée dans les faisceaux lumineux (108).

14. Appareil optique (100) selon la revendication 13, dans lequel l'appareil optique (160) présente un agencement de lentilles (162) avec au moins une lentille cylindrique (163).

15. Microscope à feuille de lumière (180) avec un appareil optique (100) selon l'une quelconque des revendications 1 à 14 dans le trajet optique d'éclairage (182).

16. Kit de mise à niveau pour un microscope à feuille de lumière (180), présentant un sous-système optique (104) qui présente à sa sortie (106) une pluralité de faisceaux lumineux collimatés (108) qui se dirigent vers un point commun (110),
avec un rétroréflecteur (112) qui présente une entrée de faisceau (114), au niveau de laquelle les faisceaux lumineux (108) sont couplés au rétroréflecteur (112) et une sortie de faisceau (116), au niveau de laquelle les faisceaux lumineux (108) sortent du rétroréflecteur (112),
dans lequel la longueur de trajet (118) parcourue dans le rétroréflecteur (112) par les faisceaux lumineux (108) entre l'entrée de faisceau (114) et la sortie de faisceau (116) dépend de l'angle d'incidence (120) respectif du faisceau lumineux à l'entrée de faisceau (114) et
dans lequel le kit de mise à niveau est configuré de manière à pouvoir être agencé dans le trajet du faisceau d'éclairage (182) du microscope à feuille de lumière (184) de manière à ce que la sortie du faisceau (116) du rétroréflecteur (112) se trouve devant l'optique à feuille de lumière (122) du microscope à feuille de lumière (184).

17. Procédé pour la génération de feuilles de lumière (102), de préférence à l'aide d'un appareil optique (100) selon l'une quelconque des revendications 1 à 14, pour lequel une pluralité d'impulsions lumineuses collimatées (158a, 158b) qui se dirigent vers un point commun, sont couplées dans un rétroréflecteur (112) et parcourent dans le rétroréflecteur (112) une longueur de trajet (118) dépendant de l'angle d'incidence (120) dans le rétroréflecteur (112) avant d'être découplées du rétroréflecteur (112) et transformées en une feuille de lumière (102) à chaque fois.
